(19) Europäisches Patentamt
European Patent Office
Office européen des brevets

(11) EP 4 491 010 A1

(12) **EUROPEAN PATENT APPLICATION**
published in accordance with Art. 153(4) EPC

(43) Date of publication:
**15.01.2025 Bulletin 2025/03**

(21) Application number: **23766849.6**

(22) Date of filing: **07.03.2023**

(51) International Patent Classification (IPC):
***A01G 7/00*** *(2006.01)*

(52) Cooperative Patent Classification (CPC):
**A01G 7/00**

(86) International application number:
**PCT/JP2023/008600**

(87) International publication number:
**WO 2023/171673 (14.09.2023 Gazette 2023/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.03.2022 JP 2022035175**

(71) Applicant: **Chiyoda Corporation**
**Kanagawa 220-8765 (JP)**

(72) Inventors:
- **TAMURA Satoru**
  **Yokohama-shi, Kanagawa 220-8765 (JP)**
- **EIDA Tsugio**
  **Yokohama-shi, Kanagawa 220-8765 (JP)**
- **MINAMI Takeshi**
  **Yokohama-shi, Kanagawa 220-8765 (JP)**
- **YAMAMOTO Takeshi**
  **Yokohama-shi, Kanagawa 220-8765 (JP)**
- **AWAI Eiji**
  **Yokohama-shi, Kanagawa 220-8765 (JP)**
- **TAKEDA Dai**
  **Yokohama-shi, Kanagawa 220-8765 (JP)**

(74) Representative: **Dehns**
**10 Old Bailey**
**London EC4M 7NG (GB)**

# (54) GROWTH STATE ESTIMATION METHOD AND CULTIVATION APPARATUS

(57) [Task] To provide a growth state estimation method and a cultivation device that can estimate a growth state of a plant in the future.

[Solution] A growth state estimation method includes: a first step of acquiring a first state quantity based on illuminance acquired by an illuminometer, the first state quantity corresponding to light energy absorbed by a plant from a start of setting thereof to a first time; a second step of estimating, as first mass, mass of the plant at the first time based on the first state quantity using a first model; a third step of estimating, as second mass, the mass of the plant at the first time based on an elapsed time from the start of setting to the first time using a second model; a fourth step of correcting a fitting parameter of the second model such that a difference between the second mass and the first mass is equal to or less than a prescribed first threshold and thereby creating a corrected second model; and a fifth step of estimating the mass of the plant at a second time after the first time using the corrected second model.

*Fig.1*

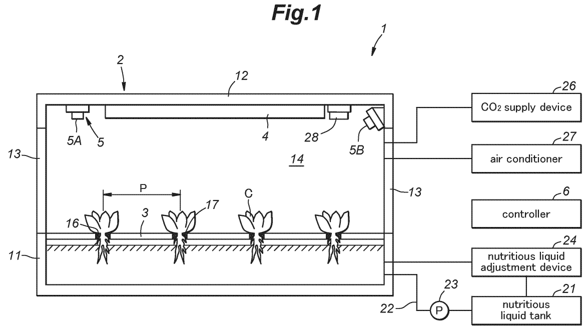


EP 4 491 010 A1

## Description

### TECHNICAL FIELD

The present invention relates to a growth state estimation method for estimating a growth state of a plant in a cultivation device.

### BACKGROUND ART

Patent Documents 1 and 2 disclose a device for optically measuring a growth state of a plant. This device includes a light source that emits light toward the plant, an illuminometer that measures an intensity of reflected light reflected by the plant to be measured, and a calculation unit that calculates the growth state of the plant based on the intensity of light detected by the illuminometer. This device makes it possible to quickly acquire the growth state of the plant without contact.

### PRIOR ART DOCUMENT(S)

### PATENT DOCUMENT(S)

Patent Document 1: JP2008-076346A
Patent Document 2: JP2015-223101A

### SUMMARY OF THE INVENTION

### TASK TO BE ACCOMPLISHED BY THE INVENTION

However, while the device according to Patent Documents 1 and 2 can acquire the growth state of the plant at the present time, the device cannot estimate the growth state of the plant at any time in the future. If the growth state of the plant in the future can be acquired, the harvest time can be predicted and the cultivation conditions can be adjusted.

In view of the above background, an object of the present invention is to provide a growth state estimation method and a cultivation device that can estimate a growth state of a plant in the future.

### MEANS TO ACCOMPLISH THE TASK

To achieve such an object, one aspect of the present invention provides a growth state estimation method for estimating a growth state of a plant in a cultivation device (1), the cultivation device comprising: a case (2); a setting plate (3) that is arranged in the case and on which the plant is set; a light source (4) configured to emit light toward the setting plate; and an illuminometer (5) arranged to face the setting plate, the growth state estimation method comprising: a first step (S1) of acquiring a first state quantity based on a light intensity acquired by the illuminometer, the first state quantity corresponding to light energy absorbed by the plant from a start of setting thereof to a first time; a second step (S2) of estimating, as first mass, mass of the plant at the first time based on the first state quantity using a first model that defines a relationship between the first state quantity and the mass of the plant; a third step (S3) of estimating, as second mass, the mass of the plant at the first time based on an elapsed time from the start of setting to the first time using a second model that defines a relationship between the elapsed time from the start of setting and the mass of the plant; a fourth step (S4) of correcting a fitting parameter of the second model such that a difference between the second mass and the first mass is equal to or less than a prescribed first threshold and thereby creating a corrected second model; and a fifth step of estimating the mass of the plant at a second time after the first time using the corrected second model.

According to this aspect, it is possible to provide a growth state estimation method that can estimate a growth state of a plant in the future. Since the mass of the plant is correlated with the quantity of absorbed light energy, it is possible to estimate, as the first mass, the mass of the plant at the first time based on the first state quantity using the first model. Further, since the mass of the plant is correlated with the elapsed time from the setting, that is, the total irradiation time of light from setting, it is possible to estimate, as the second mass, the mass of the plant at the first time using the second model. By correcting the second model such that the difference between the second mass and the first mass is equal to or less than the first threshold, it is possible to acquire the corrected second model that takes into account the growth state of the plant at the first time. By using the corrected second model acquired in this way, it is possible to estimate the mass of the plant at any time in the future with high accuracy.

In the above aspect, preferably, the first model is created based on the mass of the plant at each time and a state quantity corresponding to the light energy absorbed by the plant, the mass of the plant at each time and the state quantity being acquired by preliminary cultivation of the plant using the cultivation device.

According to this aspect, it is possible to acquire the first model according to the cultivation device.

In the above aspect, preferably, the mass of the plant is edible portion mass that is mass of an edible portion of the plant, and the edible portion mass is estimated based on total mass of the plant using a third model that defines a relationship between the total mass that is mass of a whole of the plant and the edible portion mass.

According to this aspect, it is possible to estimate the edible portion mass of the plant in the future.

In the above aspect, preferably, plants are set on the setting plate at a prescribed pitch, and the first model is corrected according to the pitch.

According to this aspect, it is possible to estimate the first mass more accurately.

Another aspect of the present invention provides a cultivation device (1) of a plant (C) comprising: a case (2); a setting plate (3) that is arranged in the case and on which the plant is set; a light source (4) configured to emit light toward the setting plate; an illuminometer (5) arranged to face the setting plate; and a controller connected to the light source and the illuminometer, wherein the controller (6) is configured to acquire a first state quantity based on a light intensity acquired by the illuminometer, the first state quantity corresponding to light energy absorbed by the plant from a start of setting thereof to a first time; estimate, as first mass, mass of the plant at the first time based on the first state quantity using a first model that defines a relationship between the first state quantity and the mass of the plant; estimate, as second mass, the mass of the plant at the first time based on an elapsed time from the start of setting to the first time using a second model that defines a relationship between the elapsed time from the start of setting and the mass of the plant; correct a fitting parameter of the second model such that a difference between the second mass and the first mass is equal to or less than a prescribed first threshold and thereby creating a corrected second model; estimate the mass of the plant at a second time after the first time using the corrected second model; and control the light source based on a difference between the mass of the plant at the second time and a target mass.

According to this aspect, it is possible to provide a cultivation device that estimates a growth state of a plant in the future and controls the light source based on the estimated growth state.

## EFFECT OF THE INVENTION

Thus, according to the above aspects, it is possible to provide a growth state estimation method and a cultivation device that can estimate a growth state of a plant in the future.

## BRIEF DESCRIPTION OF THE DRAWING(S)

Figure 1 is a schematic diagram of a cultivation device;

Figure 2 is a schematic diagram of a setting plate of the cultivation device viewed from above;

Figure 3 is a schematic diagram of the setting plate of the cultivation device viewed from above;

Figure 4 is a flowchart showing steps of a growth state estimation process;

Figure 5 is a graph showing a relationship between total mass and edible portion mass of frill lettuce;

Figure 6 is a graph showing a relationship between total mass and edible portion mass of bok choy;

Figure 7 is a graph showing a relationship between total mass and edible portion mass of wine dress;

Figure 8 is a graph showing a relationship between total mass and edible portion mass of potherb mustard;

Figure 9 is a graph showing actual measurement values of edible portion mass of a plant measured in preliminary cultivation and an approximate curve based on a first model;

Figure 10 is a graph showing the actual measurement values of the edible portion mass of the plant measured in the preliminary cultivation and an approximate curve based on a second model;

Figure 11 is a graph showing the actual measurement values of the edible portion mass of the plant measured in main cultivation and an approximate curve (pitch: 200 mm) based on the first model;

Figure 12 is a graph showing the actual measurement values of the edible portion mass of the plant measured in the main cultivation and an approximate curve (pitch: 150 mm) based on the first model;

Figure 13 is a graph (pitch: 200 mm) showing estimation mass and the actual measurement value of the edible portion 20 days after setting estimated at each time of the main cultivation; and

Figure 14 is a graph (pitch: 150 mm) showing the estimation mass and the actual measurement value of the edible portion 20 days after setting estimated at each time of the main cultivation.

## MODE(S) FOR CARRYING OUT THE INVENTION

In the following, an embodiment of a growth state estimation method of plants and a cultivation device of the plants according to the present invention will be described.

As shown in Figures 1 and 2, a cultivation device 1 includes a case 2, a setting plate 3 that is arranged in the case 2 and on which plants C are set, a light source 4 configured to emit light toward the setting plate 3, an illuminometer 5 arranged to face the setting plate 3, and a controller 6 connected to the light source 4 and the illuminometer 5.

The case 2 includes a nutritious liquid pool 11 that forms the bottom thereof, a ceiling panel 12 arranged above and spaced apart from the nutritious liquid pool 11, and a plurality of sidewall panels 13 arranged around the nutritious liquid pool 11 and the ceiling panel 12. The setting plate 3 is arranged in an upper portion of the nutritious liquid pool 11. The setting plate 3 is formed in a flat plate shape, and surfaces thereof face upward and downward. A plurality of beams may be stretched across the upper portion of the nutritious liquid pool 11, and the setting plate 3 may be supported by the plurality of beams. The plurality of sidewall panels 13 is arranged to close a gap between the nutritious liquid pool 11 and the ceiling panel 12. The plurality of sidewall panels 13 is removably attached to the nutritious liquid pool 11 and the ceiling panel 12. The ceiling panel 12, the sidewall panels 13, and the setting plate 3 define a cultivation chamber 14.

Surfaces of the ceiling panel 12, the sidewall panels 13, and the setting plate 3 facing the cultivation chamber 14 are made of highly reflective materials. The surfaces of the ceiling panel 12, the sidewall panels 13, and the setting plate 3 facing the cultivation chamber 14 may be white. The ceiling panel 12, the sidewall panels 13, and the setting plate 3 may be made of a white material. Further, the ceiling panel 12, the sidewall panels 13, and the setting plate 3 may be painted with white paint. Furthermore, reflectors may be provided on the surfaces of the ceiling panel 12, the sidewall panels 13, and the setting plate 3.

The setting plate 3 may be formed, for example, of polystyrene foam. The setting plate 3 has a plurality of holes 16 penetrating therethrough in the thickness direction. Each hole 16 may be formed in a circular shape. The holes 16 are spaced apart from each other at a prescribed pitch P. The pitch P may be set, for example, to 50 mm to 300 mm. As shown in Figure 2, the holes 16 may be arranged at the vertices of equilateral triangles when viewed from above. As shown in Figure 3, the holes 16 may be arranged at the vertices of squares when viewed from above.

A holding material 17 for holding the plant C may be fitted into each hole 16. The holding material 17 may be made of a material that is flexible and permeable. The holding material 17 may be made of, for example, urethane foam or rock wool. The holding material 17 has a through hole for the plant C to pass through. The plant C may be held in the hole 16 via the holding material 17.

The light source 4 is provided on a lower surface of the ceiling panel 12. The light source 4 may be composed of LEDs. The LEDs may have a far-red to blue wavelength range. The LEDs may include red LEDs and blue LEDs. The light source 4 may also be composed of other artificial light sources such as laser diodes (LDs), cold cathode fluorescent lamps (CCFLs), fluorescent lights, and the like. The light source 4 emits light downward, that is, toward the setting plate 3.

The illuminometer 5 may be composed of a photon sensor that measures a light intensity (photon flux density) [$\mu mol/m^2/s$] in the cultivation chamber 14. Further, the illuminometer 5 may be composed of a general illuminometer such as a lux meter for which correlation with the photon sensor has been confirmed. The illuminometer 5 includes a plurality of first illuminometers 5A provided on the lower surface of the ceiling panel 12 and a plurality of second illuminometers 5B provided on at least one of the ceiling panel 12 and the sidewall panels 13. Each first illuminometer 5A is arranged so as to face vertically downward. Each second illuminometer 5B is arranged so as to be inclined at an angle of 5 to 85 degrees with respect to the vertical downward direction. The illuminometer 5 measures reflected light emitted from the light source 4 and reflected by the setting plate 3, the sidewall panels 13, the ceiling panel 12, and the plants C set on the setting plate 3.

The nutritious liquid pool 11 is connected to a nutritious liquid tank 21 via a circulation path 22. A nutritious liquid is stored in the nutritious liquid tank 21. The nutritious liquid is a solution containing nutrients necessary for the growth of the plants C. The circulation path 22 is provided with a pump 23 that transports the nutritious liquid, and a nutritious liquid adjustment device 24 for adjusting the nutritious liquid. The nutritious liquid adjustment device 24 adjusts the values of electrical conductivity (EC) and pH of the nutritious liquid.

The cultivation device 1 further includes a $CO_2$ supply device 26 and an air conditioner 27. The $CO_2$ supply device 26 is connected to the case 2 and supplies carbon dioxide to the cultivation chamber 14. The air conditioner 27 is connected to the case 2 and regulates the temperature, humidity, and airflow (wind speed) of the cultivation chamber 14. The cultivation device 1 may also include a camera 28 that captures images in the cultivation chamber 14. The camera 28 may be provided, for example, on the ceiling panel 12, and may capture images of the plants C on the setting plate 3.

The controller 6 is an arithmetic operation device including a microprocessor (MPU), non-volatile memory, volatile memory, and an interface. The controller 6 realizes various applications as the microprocessor executes programs stored in the non-volatile memory. The controller 6 controls the power supply to the light source 4 and controls the light intensity of the light source 4. The controller 6 acquires the light intensity of the reflected light based on a signal from the illuminometer 5. The controller 6 also controls the pump 23, the nutritious liquid adjustment device 24, the $CO_2$ supply device 26, and the air conditioner 27. The controller 6 may be connected to the light source 4, the illuminometer 5, the pump 23, the nutritious liquid adjustment device 24, the $CO_2$ supply device 26, the air conditioner 27, and the camera 28 via a network such as the Internet. The controller 6 may acquire the images captured by the camera 28 and control each device based on the images.

The plants C cultivated in the cultivation device 1 may be any plants that have leaves and can be cultivated hydroponically, and may be crops such as leafy vegetables, for example. The leafy vegetables are vegetables the leaves of which are edible. Examples of the plants C include lettuce, spinach, komatsuna, bok choy, nozawana, and potherb mustard. The plants C may be leaf lettuce such as frill lettuce, sunny lettuce, wine dress, and green leaf. The plants C may also be aromatic herbs, medicinal herbs, tobacco, wasabi, and hemp. Furthermore, by understanding the correlation between the growth of leaves and the growth of roots, the present invention can be applied to crude drugs made from root vegetables such as Panax ginseng.

The plants C are set in the respective holes 16 of the setting plate 3 in a state where the plants C have grown to seedlings by a seeding process, a greening process, and a raising seedling process. Each plant C is held in the corresponding hole 16 such that the stem and leaves thereof are arranged in the cultivation chamber 14 and the roots thereof are arranged below the setting plate 3. The roots of each plant C extend into the nutritious liquid in the pool.

The plants C absorb the nutrients from the nutritious liquid in the pool and grow by absorbing light emitted from the light source 4. As the plants C grow, the leaves thereof extend and the mass thereof increases in the cultivation chamber 14.

The controller 6 controls the light source 4, the pump 23, the nutritious liquid adjustment device 24, the $CO_2$ supply device 26, and the air conditioner 27, thereby maintaining the light intensity, the temperature, humidity, wind speed, air volume, and $CO_2$ concentration in the cultivation chamber 14, the values of EC and pH of the nutritious liquid, and the nutritious liquid circulation flow to satisfy prescribed cultivation conditions. The plants C may be harvested after a prescribed period from the setting thereof.

The conditions of the cultivation device 1 are, for example, as shown in the following Table 1.

Table 1

| Item | unit | condition |
|---|---|---|
| emission photosynthetic effective photon flux density | $\mu mol/m^2/sec$ | 150-250 |
| temperature of cultivation shelf | °C | 20-25 |
| humidity of cultivation shelf | % | 70-90 |
| $CO_2$ concentration of cultivation shelf | ppm | 1000-1500 |
| EC of nutritious liquid | mS/cm | 0.8-2.2 |
| pH of nutritious liquid | | 6.0-6.5 |
| wind speed of cultivation shelf | m/sec | 0.2-1.0 |
| nutritious liquid circulation flow | L/min | 2.0-9.0 |

The controller 6 estimates the mass of the plant C at any time in the future by executing a growth state estimation process of the plant C. The growth state estimation process of the plant C is based on a growth state estimation method of the plant C.

As shown in Figure 4, the growth state estimation process of the plant C includes a first step (S1) of acquiring a first state quantity based on a light intensity acquired by the illuminometer 5, the first state quantity corresponding to light energy absorbed by the plant C from a start of setting thereof to a first time; a second step (S2) of estimating, as first mass, mass of the plant C at the first time based on the first state quantity using a first model that defines a relationship between the first state quantity and the mass of the plant C; a third step (S3) of estimating, as second mass, the mass of the plant C at the first time based on an elapsed time from the start of setting to the first time using a second model that defines a relationship between the elapsed time from the start of setting and the mass of the plant C; a fourth step (S4) of correcting a fitting parameter of the second model such that a difference between the second mass and the first mass is equal to or less than a prescribed first threshold and thereby creating a corrected second model; and a fifth step (S5) of estimating the mass of the plant C at a second time after the first time using the corrected second model.

In the first step (S1), the controller 6 acquires the first state quantities $S_{h1}$, $S_{y1}$ corresponding to the light energy absorbed by the plant C from the start of setting thereof (t=0) to the first time $t_1$ based on the light intensity acquired by the first illuminometers 5A and the second illuminometers 5B. The first state quantity $S_{h1}$ is a first state quantity calculated based on the first illuminometers 5A, and the first state quantity $S_{y1}$ is a first state quantity calculated based on the second illuminometers 5B. In another embodiment, only one of $S_{h1}$ and $S_{y1}$ may be used as the first state quantity.

After the setting, the controller 6 receives the light intensity measured by the first illuminometers 5A and the second illuminometers 5B at prescribed time intervals. The time intervals may be, for example, 1 hour, 12 hours, 24 hours, and the like. The first state quantity $S_{ht}$ at any time t after the setting can be expressed by the following Formula (1) using a light intensity $P_h$ [μmol/m$^2$/sec] acquired by the first illuminometers 5A at time t.

Formula (1)

$$S_{ht} = \int_0^t \left[1 - \frac{P_h}{P_{h0}}\right] dt$$

"$P_{h0}$" [μmol/m$^2$/sec] represents a light intensity acquired by the first illuminometers 5A in a blank state where no plant C is set on the setting plate 3.

Similarly, the first state quantity $S_{yt}$ can be expressed by the following Formula (2) using a light intensity $P_y$ [μmol/m$^2$/sec] acquired by the second illuminometers 5B at any time t after the setting.

Formula (2)

$$S_{yt} = \int_0^t \left[1 - \frac{P_y}{P_{y0}}\right] dt$$

"$P_{y0}$" [μmol/m$^2$/sec] represents a light intensity acquired by the second illuminometers 5B in the blank state where no plant C is set on the setting plate 3.

The controller 6 acquires the first state quantities $S_{h1}$, $S_{y1}$ corresponding to the light energy absorbed by the plant C from the start of setting to the first time $t_1$ by substituting the first time $t_1$ for time t in Formulae (1) and (2).

The above Formulae (1) and (2) are created based on the following concept. The plants C have a lower optical reflectance than the ceiling panel 12, the sidewall panels 13, and the setting plate 3 that define the cultivation chamber 14. Accordingly, when the plants C are set on the setting plate 3, the light intensity measured by the illuminometer 5 decreases. Furthermore, as the plants C grow, the area of the setting plate 3 covered with the plants C increases, so that the light intensity measured by the illuminometer 5 further decreases. Accordingly, the difference between the light intensity in the blank state where no plant C is set on the setting plate 3 and the light intensity at a certain time after the plants C are set on the setting plate 3 is considered to correspond to the light energy quantity absorbed by the plants C. The value acquired by integrating this difference over the period from the setting to the first time is considered to correspond to the quantity of the light energy absorbed by the plants C in the period from the setting to the first time.

In the second step (S2), the controller 6 estimates, as the first mass, the mass of the plant C at the first time based on the first state quantity using the first model that defines the relationship between the first state quantity and the mass of the plant C. The first model is expressed by the following Formula (3) in the present embodiment. The first model is an empirical Formula based on the result of the past cultivation.

Formula (3)

$$w = w_{E0} \times exp\left[\left(\varphi \times \left(\frac{pitch}{Pitch0}\right)^{\mu}\right)^{\left(1-\frac{w_0}{W_0}\right)} \times \beta^{\left(\frac{w_0}{W_0}\right)} \times \left[\int_0^t \left[\mathbf{1} - \frac{\boldsymbol{P_h}}{\boldsymbol{P_{h0}}}\right] \boldsymbol{dt}\right]^{\beta_1} \times \left[\int_0^t \left[\mathbf{1} - \frac{\boldsymbol{P_y}}{\boldsymbol{P_{y0}}}\right] \boldsymbol{dt}\right]^{\beta 2}\right]$$

"w" represents the mass [g] of each plant C at time t, "$w_0$" represents the mass [g] of each plant C at the time of setting (t=0), "$W_0$" represents the standard mass [g] of each plant C at the time of setting (t=0), "pitch" represents a pitch [mm] between the holes 16, and "φ", "μ", "β", "β1", and "β2" represent prescribed parameters. The parameters "φ", "μ", "β", "β1", and "β2" vary depending on the type and variety of the plant C, the geometry of the cultivation device 1, and the cultivation conditions. "Pitch0" represents a reference pitch, for example 200 mm or 150 mm. "Pitch0" may be a pitch in a preliminary test (preliminary cultivation) for determining each parameter of Formula (3).

Formula (3) shows that the mass w of each plant C at time t is affected by the mass of each plant C at the time of setting, the pitch P, and the first state quantity corresponding to the light energy absorbed by the plant C by time t.

The mass W of the plant C may be a total mass $W_T$ that is the mass of the whole of the plant C, or an edible portion mass $W_E$ that is the mass of an edible portion of the plant C. The edible portion mass $W_E$ and the total mass $W_T$ have the following relationship represented by Formula (4) (third model).

Formula (4)

$$\boldsymbol{W_E = \alpha \times W_T}$$

"α" is a coefficient determined by the type and variety of the plant C. The total mass $W_T$ of the plant C is the mass of the whole of the plant C including roots, a stem, and leaves. The edible portion mass $W_E$ of the plant C is the mass of the portion used for the edible purpose.

Each coefficient "φ", "μ", "α", "β", "$\beta_1$", and "$\beta_2$" in Formulae (3) and (4) may be set based on the result of the preliminary cultivation in which the plant C of the same type is cultivated using the cultivation device 1. Each coefficient may be provided to the controller 6 from a database that gathers the past results of the cultivation.

By executing the process of the second step (S2), the controller 6 can acquire the edible portion mass $W_E$ of each plant C at the first time $t_1$ without directly weighing the plant C. Based on the relationship in Formula (4), the controller 6 may acquire the total mass $W_T$ of each plant C at the first time $t_1$ instead of the edible portion mass $W_E$ of each plant C at the first time $t_1$.

In the third step (S3), the controller 6 estimates, as the second mass, the mass of the plant C at the first time from the elapsed time from the start of setting to the first time using the second model that defines the relationship between the elapsed time from the start of setting to the first time. In the present embodiment, the second model is expressed by the following Formulae (5) to (13). The second model is an empirical Formula based on the past cultivation result and is created using Runge-Kutta method.

Formula (5)

$$\boldsymbol{W_{n+1} = W_n + \Delta W}$$

$$= \boldsymbol{W_n} + \boldsymbol{a_\gamma}^{\left(1-\frac{w_0}{W_0}\right)} \times \int_{t_n}^{t_{n+1}} \left[\boldsymbol{\alpha_1} \times \boldsymbol{W} \times \left(\mathbf{1} - \left[\frac{\mathbf{1}}{\mathbf{1} + \boldsymbol{e}^{(\boldsymbol{D_x} - \boldsymbol{t})}}\right]\right) + \boldsymbol{\alpha_2} \times \left[\frac{\mathbf{1}}{\mathbf{1} + \boldsymbol{e}^{(\boldsymbol{D_x} - \boldsymbol{t})}}\right]\right] \boldsymbol{dt}$$

Formula (6)

$$S(t) = \frac{1}{1 + e^{-g(t-Dx)}}$$

Formula (7)

$$D_x = D_{x\mathrm{Pitch0}} \times \left(\frac{pitch}{Pitch0}\right)$$

Formula (8)

$$\gamma = a_{\gamma}^{\left(1 - \frac{W_0}{W_0}\right)}$$

Formula (9)

$$W_{n+1} = W_n + \Delta W = W_n + \frac{(k_1 + 2k_2 + 2k_3 + k_4)}{6}$$

Formula (10)

$$k_1 = \left[\alpha_1 \times (W + \Delta t)^n \times \left((1 - S(t)\right) + \alpha_2 \times S(t) \times \Delta t\right] \times \gamma$$

Formula (11)

$$k_2 = \left[\alpha_1 \times \left(W + \frac{\Delta t}{2} \times k_1\right)^n \times \left((1 - S(t)\right) + \alpha_2 \times S(t) \times \frac{\Delta t}{2} \times k_1\right] \times \gamma$$

Formula (12)

$$k_3 = \left[\alpha_1 \times \left(W + \frac{\Delta t}{2} \times k_2\right)^n \times \left((1 - S(t)\right) + \alpha_2 \times S(t) \times \frac{\Delta t}{2} \times k_2\right] \times \gamma$$

Formula (13)

$$k_4 = \left[\alpha_1 \times (W + \Delta t \times k_3)^n \times \left((1 - S(t)\right) + \alpha_2 \times S(t) \times \Delta t \times k_3\right] \times \gamma$$

"Wn" is the mass [g] of the nth plant C (the plant C on the nth day), "$\alpha_1$" and "$\alpha_2$" are fitting parameters, and "g", "n", "$\alpha_\gamma$", and "$Dx_{Pitch0}$" are prescribed parameters. Each parameter of the second model varies depending on the type and variety of the plant C, the geometry of the cultivation device 1, and the cultivation conditions. Each parameter is set based on the result of the preliminary cultivation. Each parameter may be provided from a database that gathers the result of the preliminary cultivation. "Dx" is a planar saturation time, and represents the time required for the leaves of the plants C to completely cover an upper surface of the setting plate 3 and for the measurement value of the illuminometer 5 to become constant. "$Dx_{Pitch0}$" is a planar saturation time acquired when the preliminary test (preliminary cultivation) for determining each parameter is executed at a standard pitch (for example, 200 mm or 150 mm).

In the fourth step (S4), the controller 6 corrects the fitting parameters of the second model such that the difference between the second mass and the first mass is equal to or less than the prescribed first threshold, thereby creating the corrected second model. The corrected second model is created by correcting the fitting parameters $\alpha_1$ and $\alpha_2$ in Formula (5). The fitting parameters $\alpha_1$ and $\alpha_2$ may be set such that the difference between the second mass calculated by the corrected second model and the first mass is minimized. In a case where the difference between the second mass calculated using the second model before correction and the first mass is equal to or less than the prescribed first threshold, the change in the fitting parameters $\alpha_1$ and $\alpha_2$ may be omitted.

In the fifth step (S5), the controller 6 estimates the mass of the plant C at the second time after the first time using the corrected second model. For example, in a case where the setting period is 20 days, the controller 6 may execute the growth state estimation process every day and estimate the mass of the plant C for each day after the day of execution, or the mass of the plant C on the 20th day. The mass estimated in the fifth step may be the total mass $W_T$ or the edible portion mass $W_E$ of the plant C.

The controller 6 estimates the mass of the plant C on the last day of the setting period, that is, on the target harvest day, and controls the light source 4 based on the estimated mass on the target harvest day. For example, in a case where the mass of the plant C on the target harvest day is equal to or less than a target mass, the controller 6 may increase the light intensity of the light source 4 or lengthen the light emission time thereafter. In a case where the mass of the plant C on the target harvest day is greater than the target mass, the controller 6 may advance the target harvest day. The controller 6 may display the estimation value of the mass of the plant C in the future and the target harvest day on a display.

According to the above embodiment, it is possible to provide a growth state estimation method that can estimate a growth state of the plant C in the future. Since the mass of the plant C is correlated with the quantity of absorbed light energy, it is possible to estimate, as the first mass, the mass of the plant C at the first time based on the first state quantity using the first model. Further, since the mass of the plant C is correlated with the elapsed time from the setting, it is possible to estimate, as the second mass, the mass of the plant C at the first time using the second model. By correcting the second model such that the difference between the second mass and the first mass is equal to or less than the first threshold, it is possible to acquire the corrected second model that takes into account the growth state of the plant C at the first time. By using the corrected second model acquired in this way, it is possible to estimate the mass of the plant C at any time in the future with high accuracy.

(examples)

In the following, setting examples of each coefficient and each parameter of the first model, the second model, and the third model will be described.

(preliminary cultivation)

Frill lettuce was cultivated using the cultivation device 1. The seeding process, the greening process, and the raising seedling process were executed using seeds of frill lettuce (commercially available products, Nakahara Seed Co., Ltd., model number: L-121). After the raising seedling process was completed, the seedlings were used for the setting process in the cultivation device 1. The seeding process was executed for two days, the greening process was executed for six days, the raising seedling process was executed for eight days, and the setting process was executed for twenty days. The light source 4 of the cultivation device 1 was composed of LEDs. The light source 4 was turned on continuously for 18 hours a day and was turned off for the remaining 6 hours. Other conditions were shown in the following Table 2.

Table 2

| Item | unit | condition |
|---|---|---|
| emission photosynthetic effective photon flux density | $\mu mol/m^2/sec$ | 220±10 |
| temperature of cultivation shelf | °C | 22±2 |
| humidity of cultivation shelf | % | 80±5 |
| $CO_2$ concentration of cultivation shelf | ppm | 1200±100 |
| EC of nutritious liquid | mS/cm | 2.0±0.2 |
| pH of nutritious liquid | - | 6.3±0.1 |
| wind speed of cultivation shelf | m/sec | 0.5±0.2 |
| nutritious liquid circulation flow | L/min | 8±0.1 |

(the relationship between the total mass and the edible portion mass of the plant)

Using the setting plate 3 in which the pitch of the holes 16 is 200 mm, frill lettuce was cultivated three times in the setting process. Further, using the setting plate 3 shown in Figure 2 in which the pitch of the holes 16 is 150 mm, frill lettuce was cultivated once in the setting process. During the setting process, the total mass $W_T$ and the edible portion mass $W_E$ of randomly selected frill lettuce were weighed every day. The result is shown in Figure 5. From Figure 5, it is confirmed that there is a linear correlation between the total mass and the edible portion mass during the setting process regarding frill lettuce. Furthermore, no change was observed in the relationship between the total mass and the edible portion mass when the pitch was 150 mm and when the pitch was 200 mm. During the setting process, the ratio of the edible portion mass to the total mass was substantially 0. 86. For each cultivation result, the determination coefficient ($R^2$) of the total mass and the edible portion mass in the regression analysis was equal to or greater than 0. 98. Further, in a case where four cultivation results were combined, the determination coefficient of the total mass and the edible portion mass in the regression analysis was equal to or greater than 0. 99.

The same experiments as described above were conducted on bok choy, wine dress (lettuce), and potherb mustard instead of frill lettuce, and the total mass $W_T$ and the edible portion mass $W_E$ of each were measured. The results are shown in Figures 6 to 8. From Figures 6 to 8, it is confirmed that there is a linear correlation between the total mass and the edible portion mass during the setting process regarding bok choy, wine dress, and potherb mustard, similar to frill lettuce. During the setting process, the ratio of the edible portion mass to the total mass was substantially 0. 73 for bok choy, substantially 0. 82 for wine dress, and substantially 0. 81 for potherb mustard. In the cultivation results of bok choy, wine dress, and potherb mustard, the determination coefficient ($R^2$) of the total mass and the edible portion mass in the regression analysis was equal to or more than 0. 98.

A linear correlation between the total mass and the edible portion mass in the setting process was confirmed in frill lettuce, bok choy, wine dress, and potherb mustard. The results of frill lettuce, bok choy, wine dress, and potherb mustard suggest that there is a linear correlation between the total mass and the edible portion mass in the setting process in other plants having leaves of different shapes or colors. Accordingly, the linear correlation between the total mass and the edible portion mass in the setting process can be applied to leaf lettuce such as sunny lettuce and green leaf, and leafy vegetables other than leaf lettuce.

(the determination on the parameters of the first model)

The preliminary cultivation of frill lettuce in the setting process was executed using the setting plate 3 having the holes 16 the pitch of which is 200 mm. In the preliminary cultivation, the light intensity detected by the first illuminometers 5A and the second illuminometers 5B was acquired every day. Further, the edible portion mass $W_E$ of frill lettuce randomly sampled every day was measured using a weighing scale.

The results are shown in Figure 9. Figure 9 shows the edible portion mass $W_E$ of frill lettuce relative to the elapsed time from the start of setting. The actual measurement values in Figure 9 were approximated by the first model (Formula (3)), and "$\varphi$", "$\mu$", "$\beta$", "$\beta$1", and "$\beta$2" in Formula 3 were determined. At this time, the pitch P was set to 200 mm, and the standard mass $W_{E0}$ of the edible portion of each plant at the time of setting (t=0) was set to the mass $W_{E0}$ of the edible portion of each plant at the time of setting (t=0) ($W_{E0} = w_{E0}$). At this time, the values of "$\varphi$", "$\mu$", "$\beta$", "$\beta$1", and "$\beta$2" in Formula (3) were set by the least squares method such that the difference between the actual data and the approximate curve according to Formula (3) was minimized. The approximate curve based on the first model (Formula (3)) is shown in Figure 9. From Figure 9, it is confirmed that the approximate curve based on Formula (3) substantially matches the actual data.

(the determination on the parameters of the second model)

The actual data in Figure 9 was approximated by the second model (Formulae (5) to (13)), and the parameters "$\alpha_1$", "$\alpha_2$", "g", "n", "$\alpha_\gamma$", and "$Dx_{Pitch0}$" were determined. At this time, the pitch P was set to 200 mm, and the standard mass $W_{E0}$ of the edible portion of each plant at the time of setting (t=0) was set to the mass $W_{E0}$ of the edible portion of each plant at the time of setting (t=0) ($W_{E0} = w_{E0}$). Further, $\gamma$=1. The approximate curve based on the second model is shown in Figure 10. From Figure 10, it is confirmed that the approximate curve based on the second model substantially matches the actual data.

(main cultivation)

In the following, the main cultivation of frill lettuce was executed using the cultivation device 1, and the effectiveness of the first model, the second model, and the corrected second model was confirmed. In the main cultivation, the pitch was set to 200 mm or 150 mm, and other conditions were the same as those in the preliminary cultivation described above. The angle of the second illuminometers 5B relative to the vertical downward direction was set to 5 degrees.

(the verification of the first model)

A plurality of plants was randomly selected every day from the start of setting, and the edible portion mass was acquired using a weighing scale. Further, the light intensity of the reflected light was acquired every day using the first illuminometers 5A and the second illuminometers 5B. The results are shown in Figures 11 and 12. Figure 11 shows an estimation curve of the edible portion mass and the actual measurement value of the edible portion mass in a case where the pitch is 200 mm. Figure 12 shows an estimation curve of the edible portion mass and the actual measurement value of the edible portion mass in a case where the pitch is 150 mm. From the results of Figures 11 and 12, it is confirmed that the estimation value of the edible portion mass acquired from the first model shows high-level agreement with the actual measurement value. It is also confirmed that the estimation value of the edible portion mass can be acquired with high accuracy even if the pitch changes.

(the verification of the corrected second model)

The growth state estimation process was executed based on the result acquired from the main cultivation, and the corrected second model was created every day to acquire the edible portion mass $W_E$ of frill lettuce 20 days after the start of setting. Figure 13 shows the estimation value in a case where the pitch is 200 mm, and Figure 14 shows the estimation value in a case where the pitch is 150 mm. From Figures 13 and 14, it is confirmed that the estimation values based on the corrected second model substantially match the actual measurement values.

This concludes the explanation of the specific embodiment, but the present invention can be widely modified without being limited to the above embodiment. For example, the difference $\Delta W$ between the expected mass $W_n$ after prescribed time from the start of setting acquired by the growth state estimation process at any time and the expected mass $W_{n-1}$ acquired the last time may be calculated. $W_n$ may be used for the current expected mass in a case where the calculated difference $\Delta W$ is equal to or more than a prescribed determination value, and $W_{n-1}$ may be used for the current expected mass in a case where the calculated difference $\Delta W$ is less than the prescribed determination value.

GLOSSARY OF TERMS

1: cultivation device
2: case
3: setting plate
4: light source
5: illuminometer
5A: first illuminometer
5B: second illuminometer
6: controller
11: nutritious liquid pool
12: ceiling panel
13: sidewall panel
14: cultivation chamber
16: hole
17: holding material
21: nutritious liquid tank
22: circulation path
23: pump
24: nutritious liquid adjustment device
26: $CO_2$ supply device
27: air conditioner

## Claims

**1.** A growth state estimation method for estimating a growth state of a plant in a cultivation device,

the cultivation device comprising: a case; a setting plate that is arranged in the case and on which the plant is set; a light source configured to emit light toward the setting plate; and an illuminometer arranged to face the setting plate,
the growth state estimation method comprising:

a first step of acquiring a first state quantity based on a light intensity acquired by the illuminometer, the first state quantity corresponding to light energy absorbed by the plant from a start of setting thereof to a first time;
a second step of estimating, as first mass, mass of the plant at the first time based on the first state quantity using a first model that defines a relationship between the first state quantity and the mass of the plant;
a third step of estimating, as second mass, the mass of the plant at the first time based on an elapsed time from the start of setting to the first time using a second model that defines a relationship between the elapsed time from the start of setting and the mass of the plant;
a fourth step of correcting a fitting parameter of the second model such that a difference between the second mass and the first mass is equal to or less than a prescribed first threshold and thereby creating a corrected second model; and
a fifth step of estimating the mass of the plant at a second time after the first time using the corrected second model.

**2.** The growth state estimation method according to claim 1, wherein the first model is created based on the mass of the plant at each time and a state quantity corresponding to the light energy absorbed by the plant, the mass of the plant at each time and the state quantity being acquired by preliminary cultivation of the plant using the cultivation device.

**3.** The growth state estimation method according to claim 1 or 2, wherein the mass of the plant is edible portion mass that is mass of an edible portion of the plant, and
the edible portion mass is estimated based on total mass of the plant using a third model that defines a relationship between the total mass that is mass of a whole of the plant and the edible portion mass.

**4.** The growth state estimation method according to claim 1 or 2, wherein plants are set on the setting plate at a prescribed pitch, and
the first model is corrected according to the pitch.

**5.** A cultivation device of a plant, comprising:

a case;
a setting plate that is arranged in the case and on which the plant is set;
a light source configured to emit light toward the setting plate;
an illuminometer arranged to face the setting plate; and
a controller connected to the light source and the illuminometer,
wherein the controller is configured to
acquire a first state quantity based on a light intensity acquired by the illuminometer, the first state quantity corresponding to light energy absorbed by the plant from a start of setting thereof to a first time;
estimate, as first mass, mass of the plant at the first time based on the first state quantity using a first model that defines a relationship between the first state quantity and the mass of the plant;
estimate, as second mass, the mass of the plant at the first time based on an elapsed time from the start of setting to the first time using a second model that defines a relationship between the elapsed time from the start of setting and the mass of the plant;
correct a fitting parameter of the second model such that a difference between the second mass and the first mass is equal to or less than a prescribed first threshold and thereby creating a corrected second model;
estimate the mass of the plant at a second time after the first time using the corrected second model; and
control the light source based on a difference between the mass of the plant at the second time and a target mass.

**6.** The cultivation device according to claim 5, wherein the controller is configured to create the first model and the second model based on the mass of the plant at each time and a state quantity corresponding to the light energy absorbed by the plant, the mass of the plant at each time and the state quantity being acquired by preliminary cultivation of the plant using the cultivation device.

**7.** The cultivation device according to claim 5 or 6, wherein the mass of the plant is edible portion mass that is mass of an edible portion of the plant, and
the controller is configured to estimate the edible portion mass based on total mass of the plant using a third model that defines a relationship between the total mass that is mass of a whole of the plant and the edible portion mass.

8. The cultivation device according to claim 5 or 6, wherein plants are set on the setting plate at a prescribed pitch, and the controller is configured to correct the first model according to the pitch.

*Fig.1*

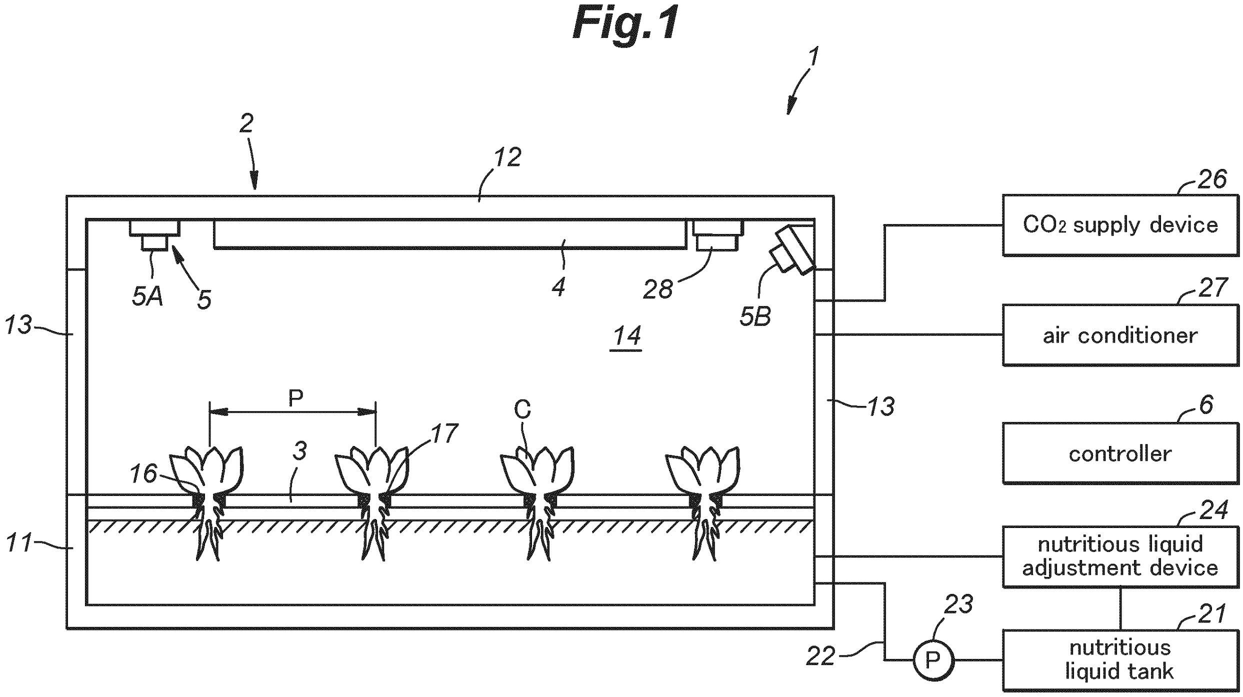
1
2
12
26
CO2 supply device
5A
5
4
28
5B
13
14
27
air conditioner
13
P
C
17
6
controller
16
3
11
24
nutritious liquid
adjustment device
23
21
22
P
nutritious
liquid tank

Fig.2

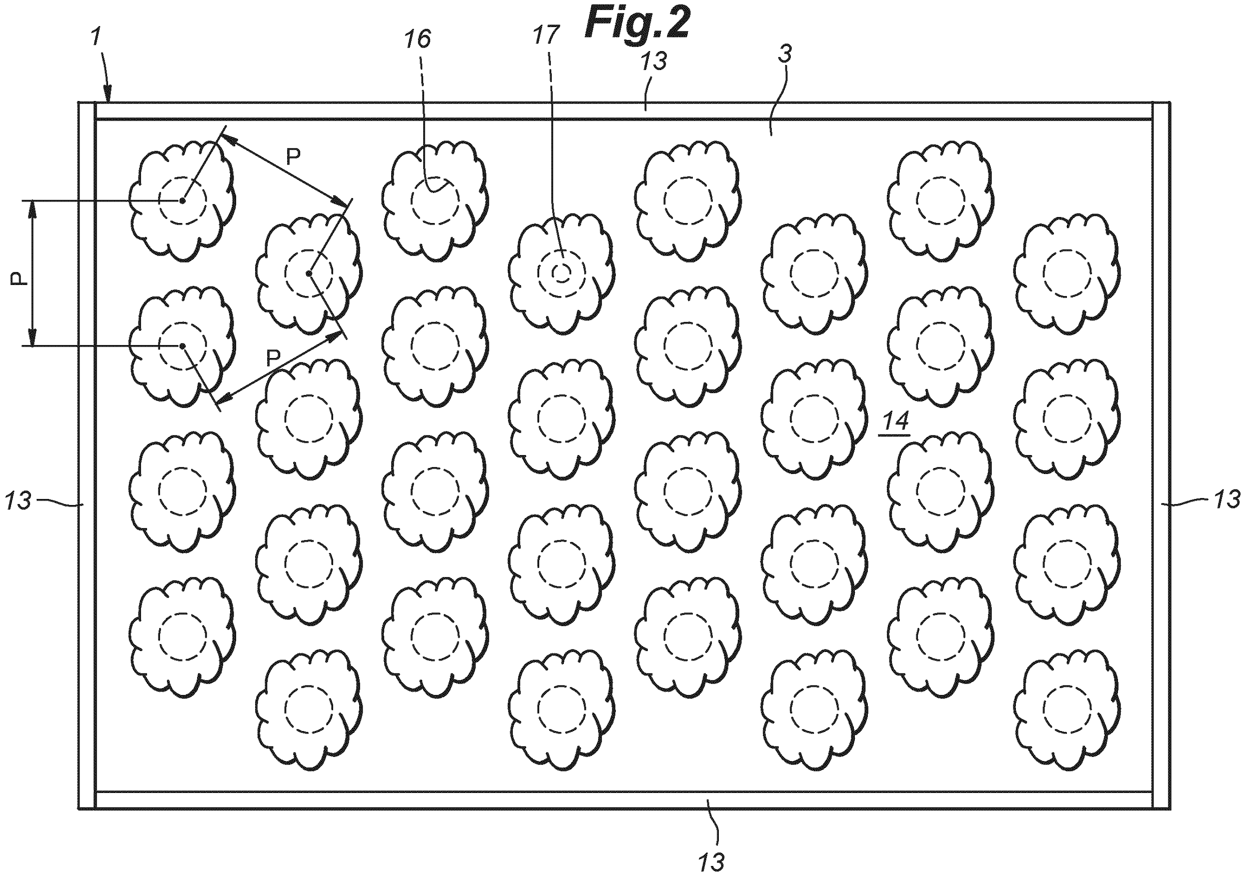

*Fig.3*

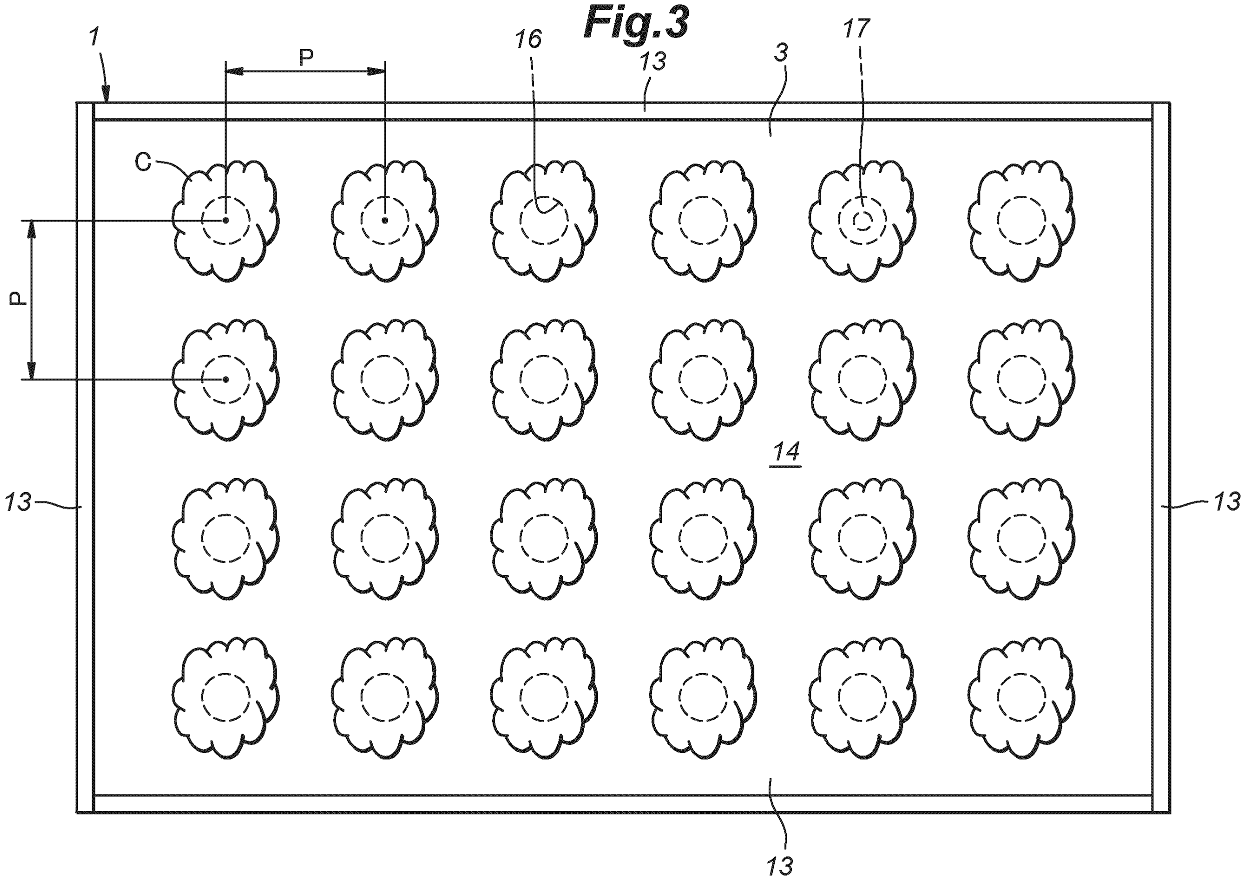

Fig.4

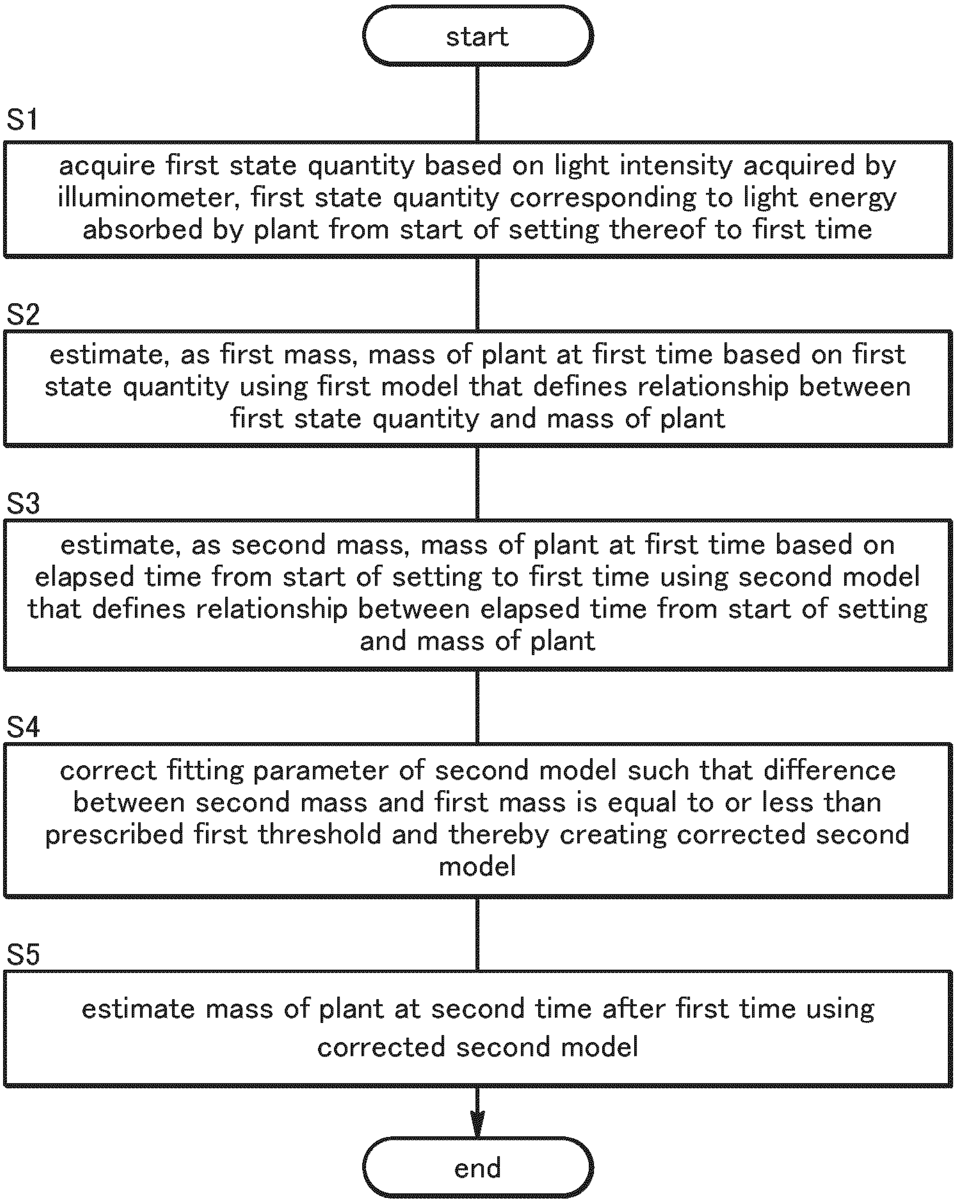
start
S1
acquire first state quantity based on light intensity acquired by illuminometer, first state quantity corresponding to light energy absorbed by plant from start of setting thereof to first time
S2
estimate, as first mass, mass of plant at first time based on first state quantity using first model that defines relationship between first state quantity and mass of plant
S3
estimate, as second mass, mass of plant at first time based on elapsed time from start of setting to first time using second model that defines relationship between elapsed time from start of setting and mass of plant
S4
correct fitting parameter of second model such that difference between second mass and first mass is equal to or less than prescribed first threshold and thereby creating corrected second model
S5
estimate mass of plant at second time after first time using corrected second model
end

# *Fig.5*

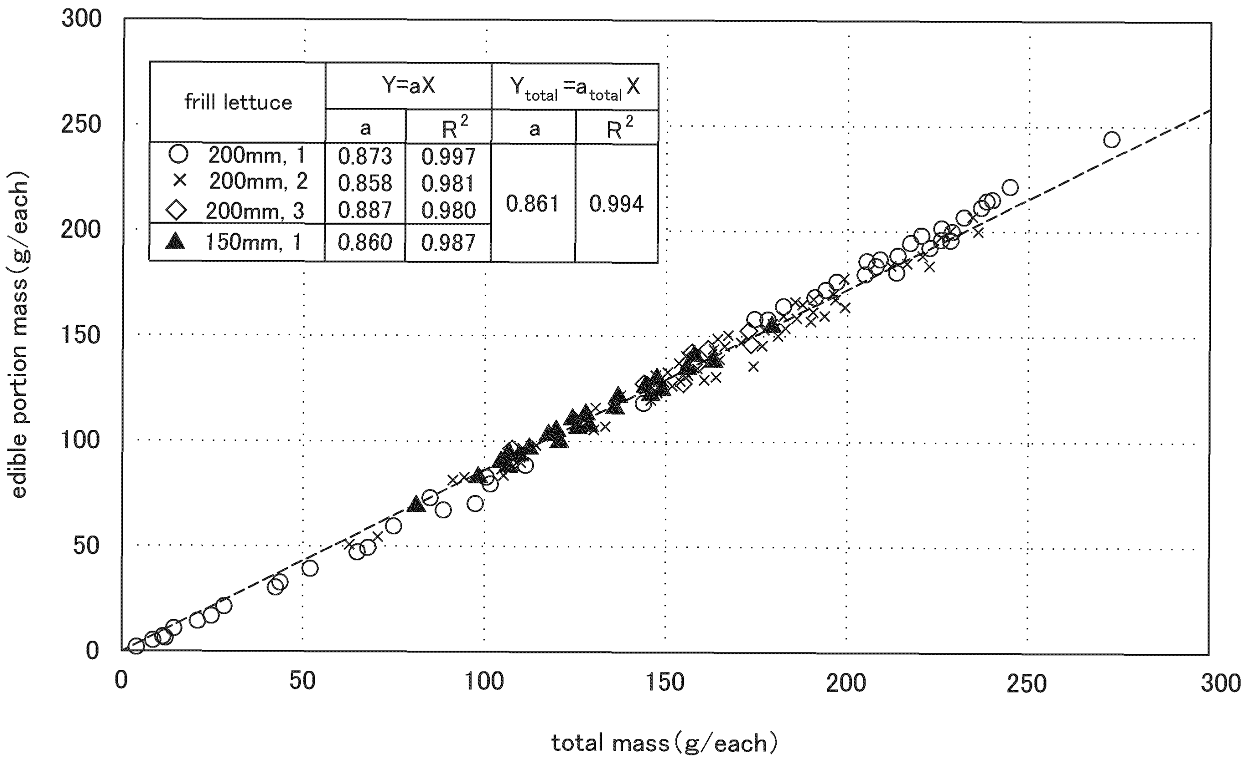
frill lettuce
Y=aX
$Y_{total}=a_{total}X$
a
$R^2$
a
$R^2$
200mm, 1 0.873 0.997
200mm, 2 0.858 0.981
200mm, 3 0.887 0.980
150mm, 1 0.860 0.987
0.861 0.994
edible portion mass (g/each)
total mass (g/each)
0
50
100
150
200
250
300

*Fig.6*

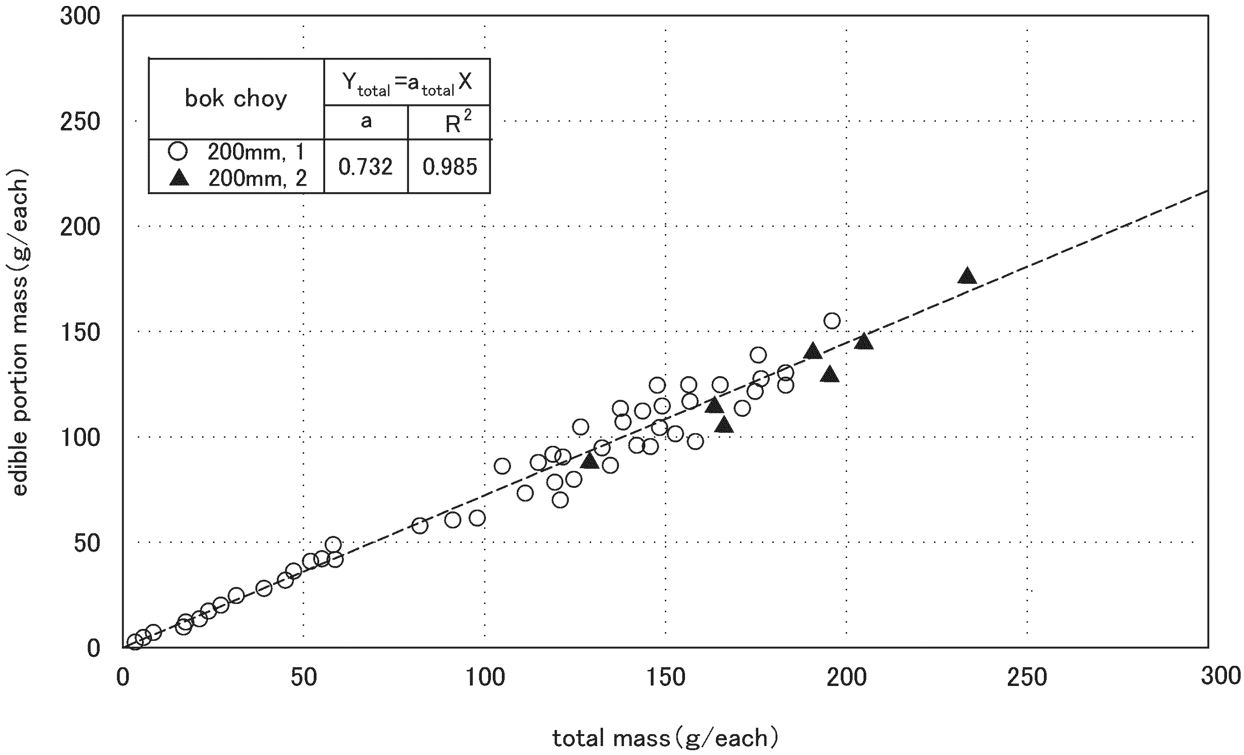
300
250
200
150
100
50
0
0
50
100
150
200
250
300
edible portion mass (g/each)
total mass (g/each)
bok choy
Y total =a total X
a
R 2
200mm, 1
200mm, 2
0.732
0.985

*Fig.7*

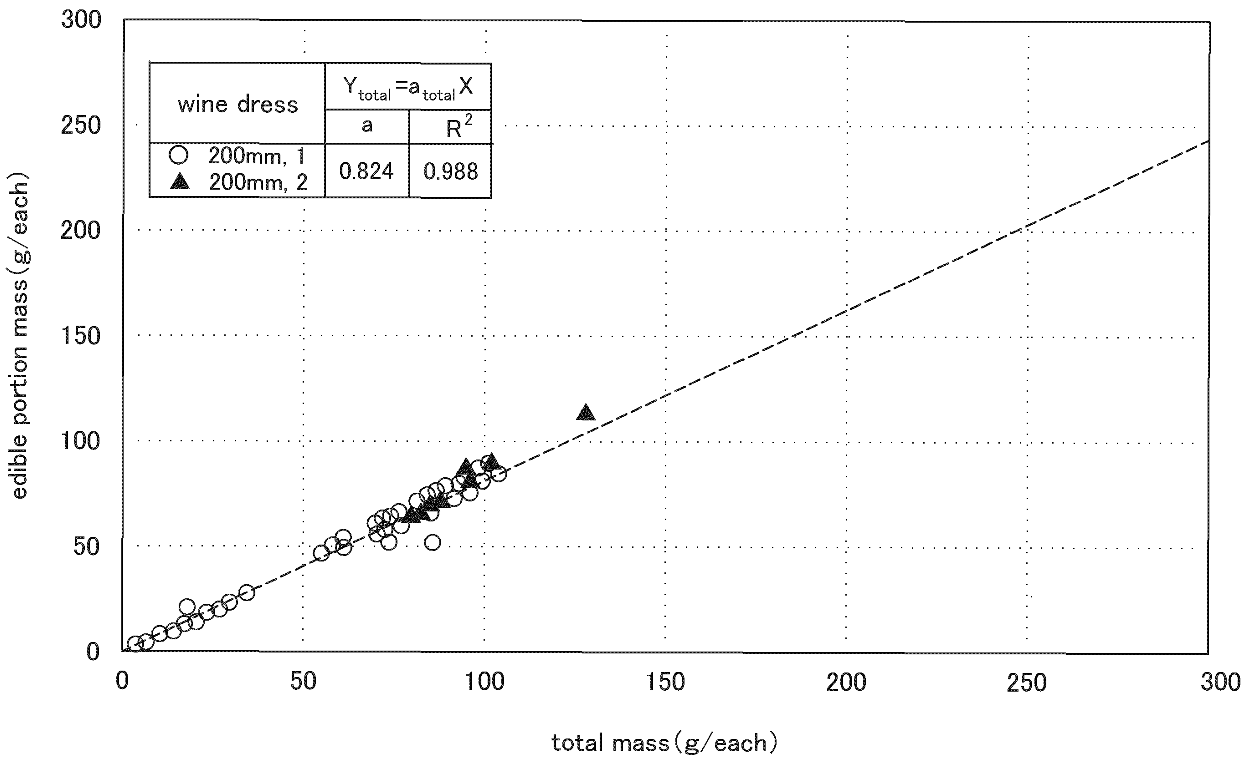
wine dress
$Y_{total}=a_{total}X$
a
$R^2$
200mm, 1
200mm, 2
0.824
0.988
edible portion mass (g/each)
total mass (g/each)
0
50
100
150
200
250
300

*Fig.8*

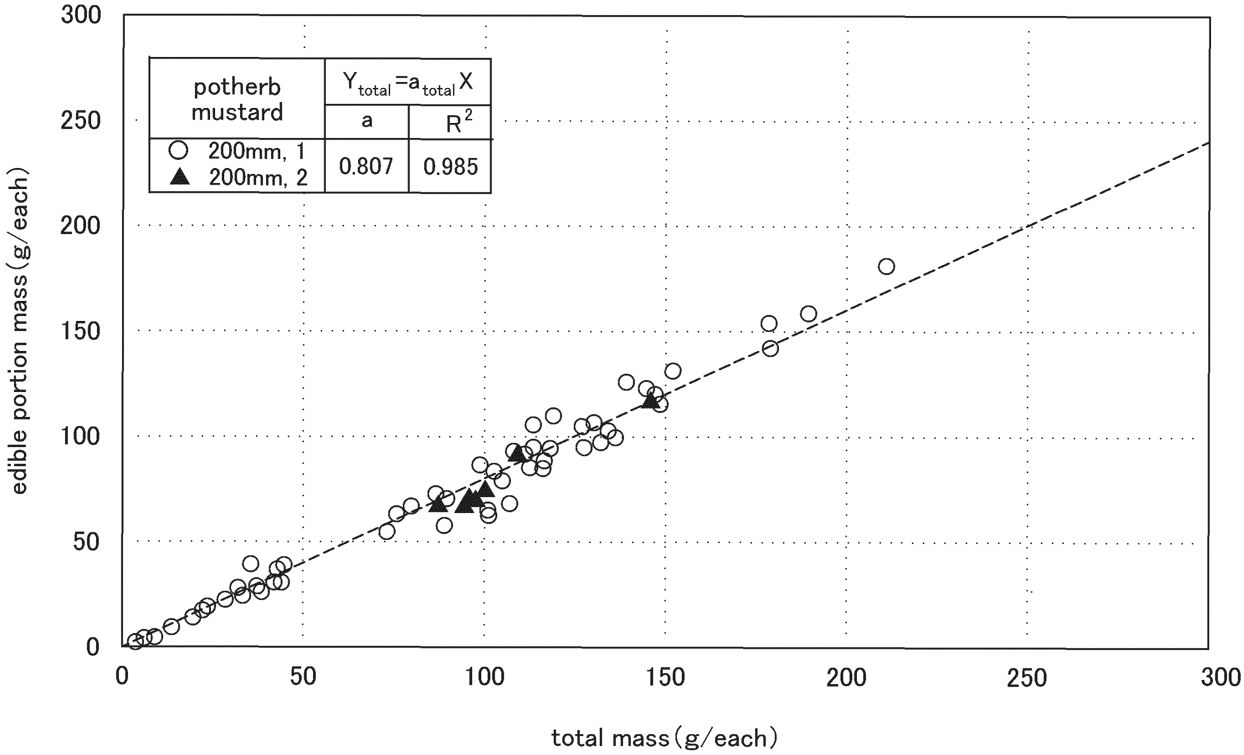
potherb mustard
$Y_{total} = a_{total} X$
a
$R^2$
200mm, 1
200mm, 2
0.807
0.985
edible portion mass (g/each)
total mass (g/each)
0
50
100
150
200
250
300

*Fig.9*

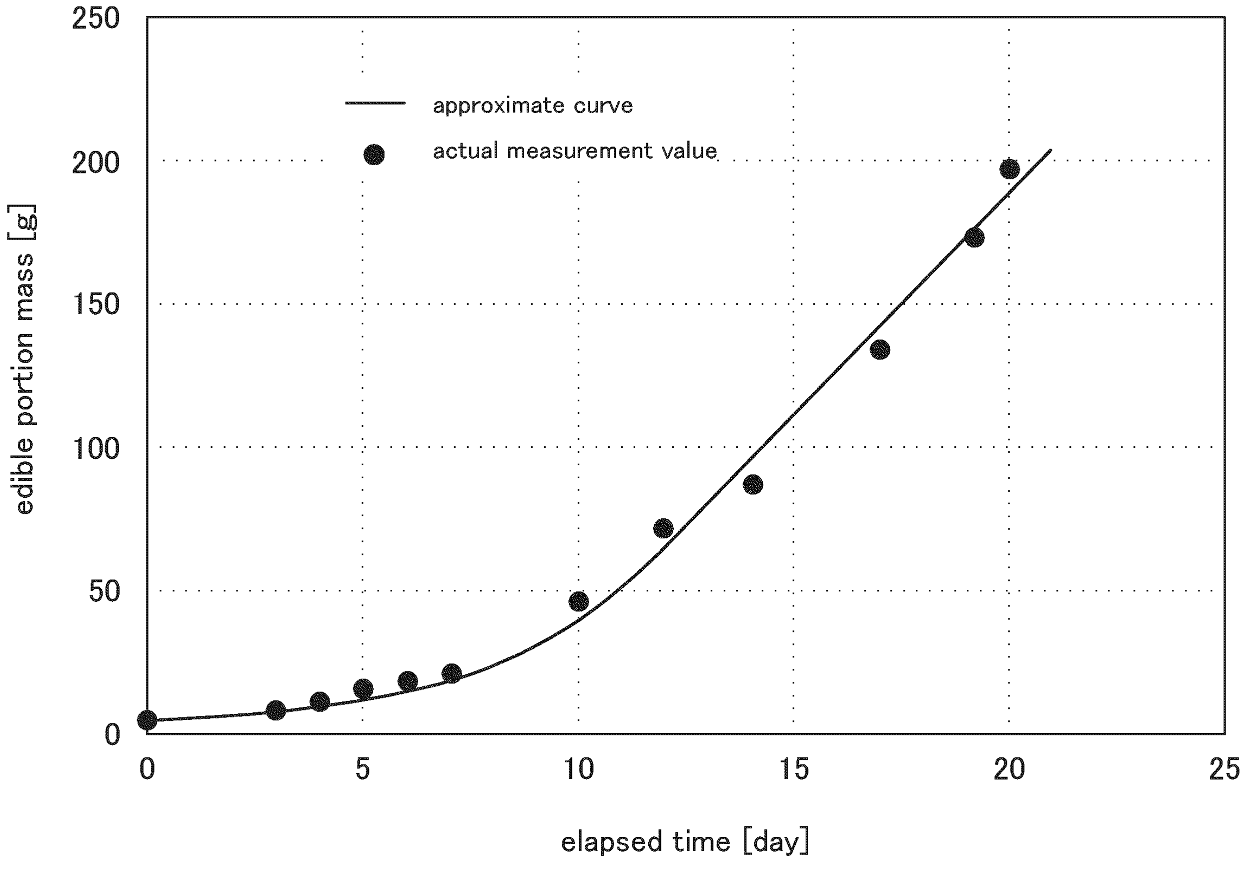
approximate curve
actual measurement value
edible portion mass [g]
elapsed time [day]
0
50
100
150
200
250
0
5
10
15
20
25

*Fig.10*

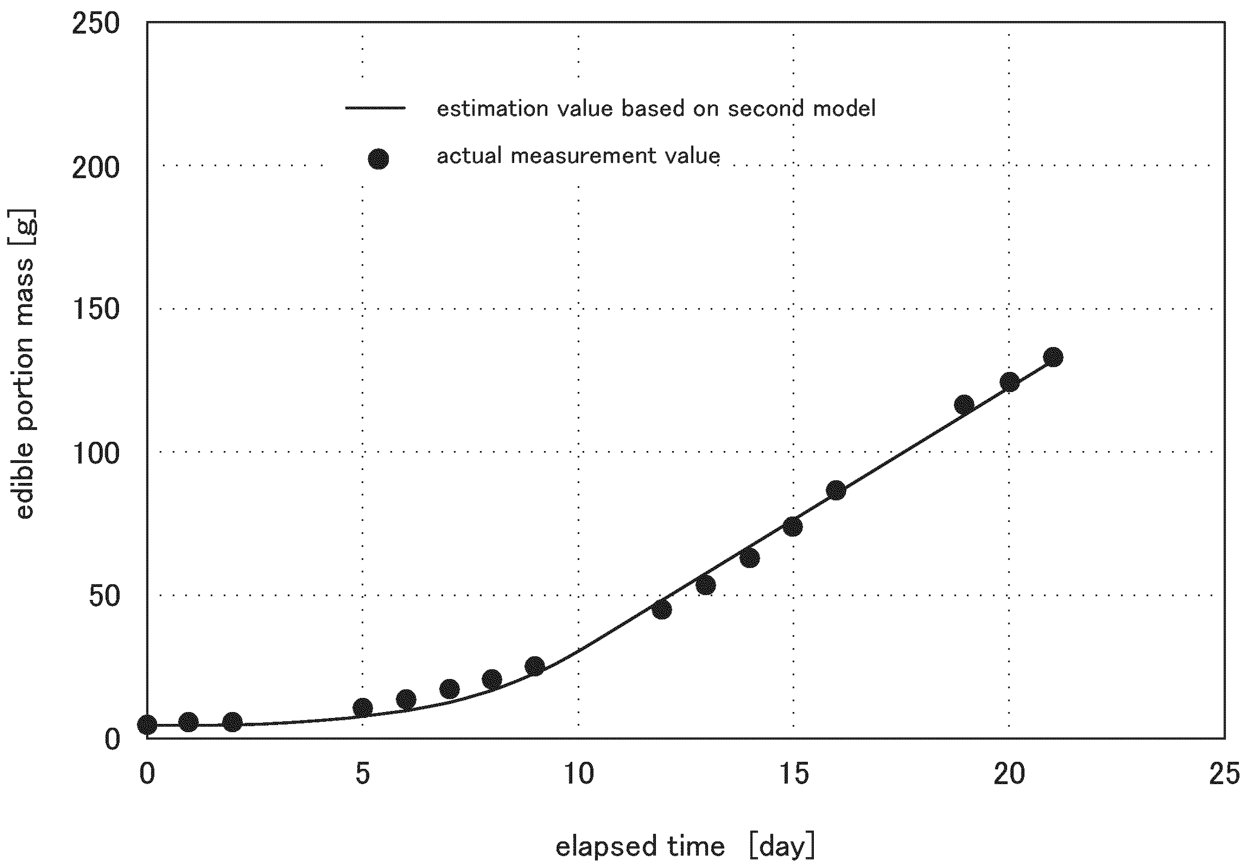

estimation value based on second model
actual measurement value
250
200
150
100
50
0
edible portion mass [g]
0
5
10
15
20
25
elapsed time [day]

# Fig.11

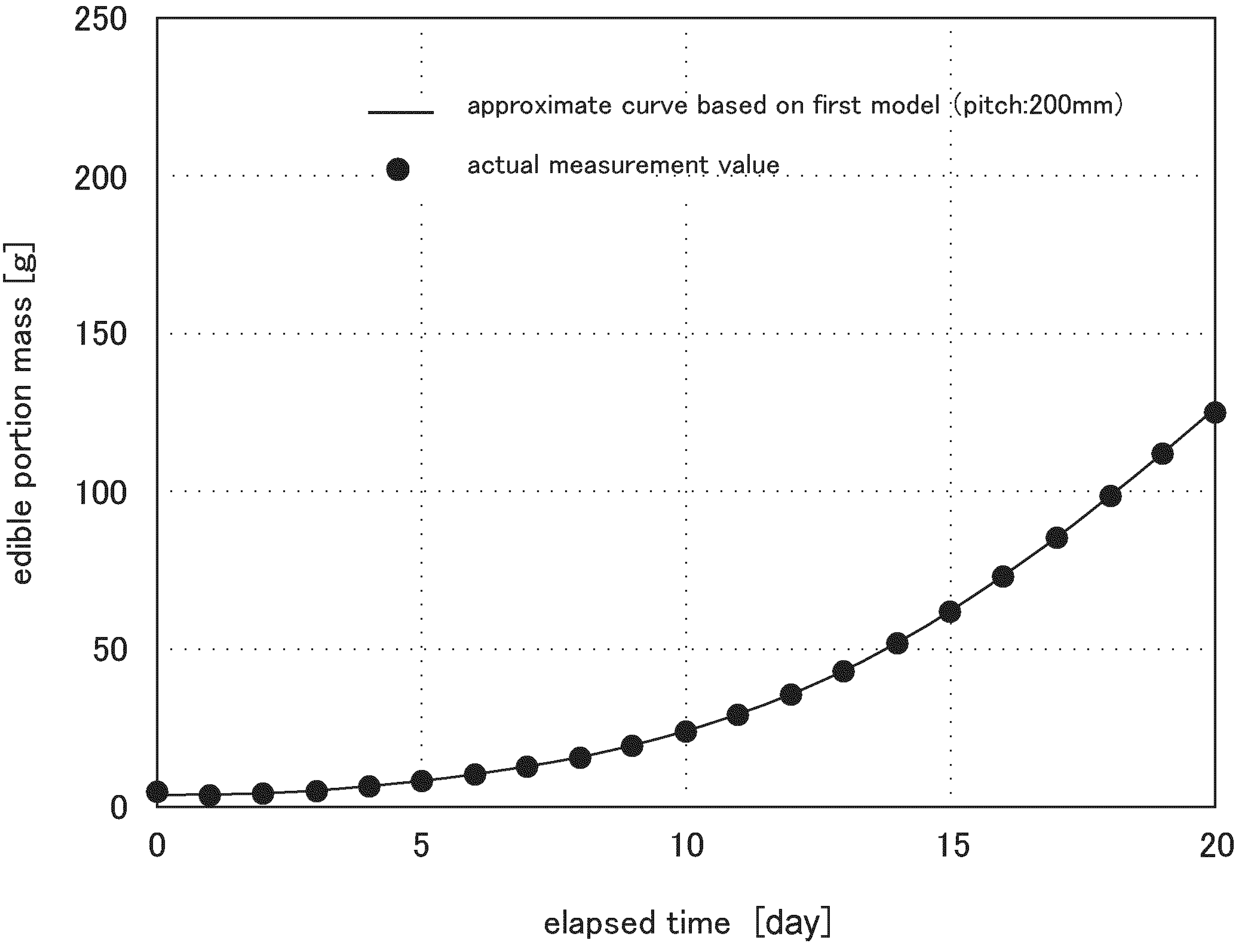
approximate curve based on first model (pitch:200mm)
actual measurement value
250
200
150
100
50
0
edible portion mass [g]
0
5
10
15
20
elapsed time [day]

*Fig.12*

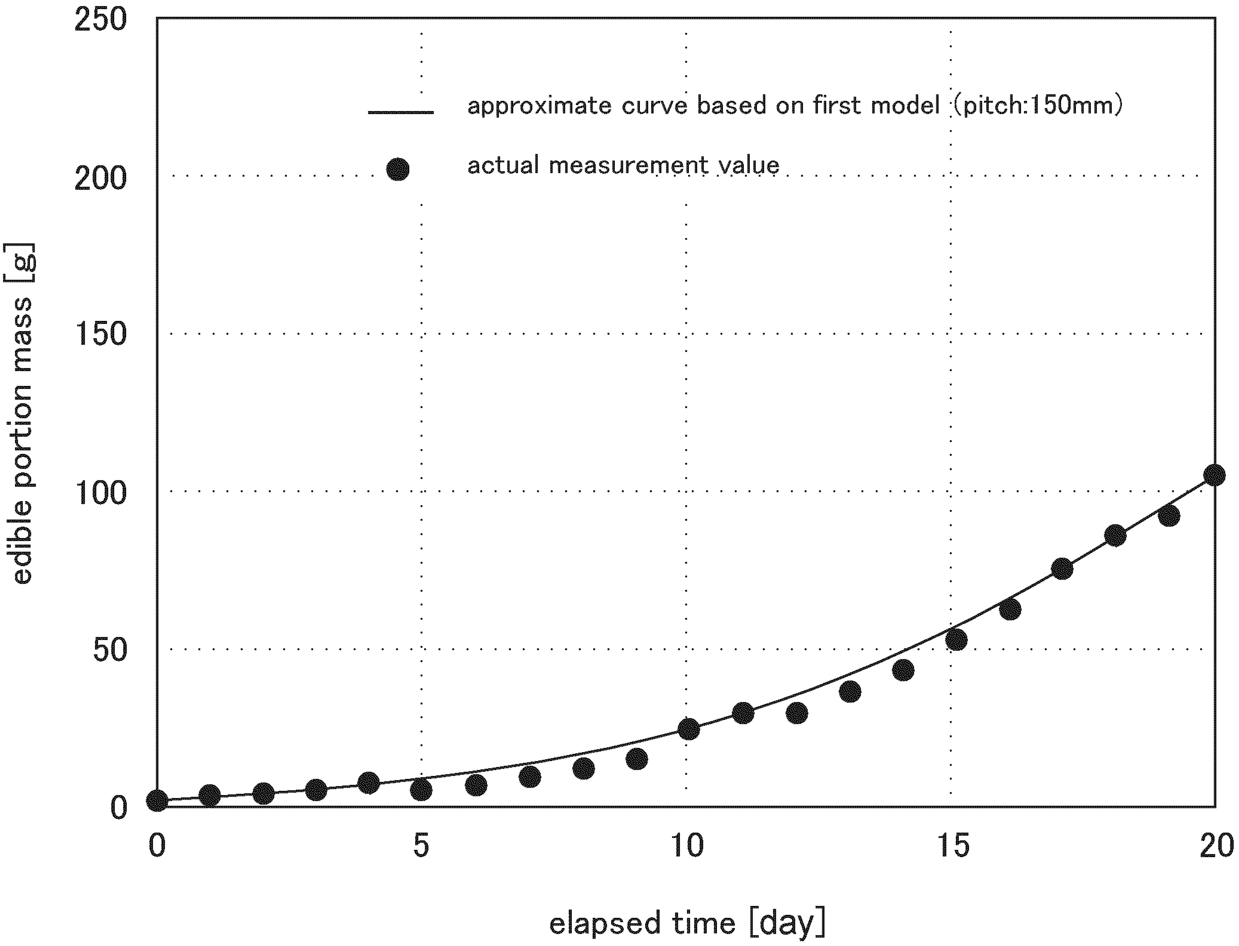
approximate curve based on first model (pitch:150mm)
actual measurement value
edible portion mass [g]
elapsed time [day]
250
200
150
100
50
0
0
5
10
15
20

*Fig.13*

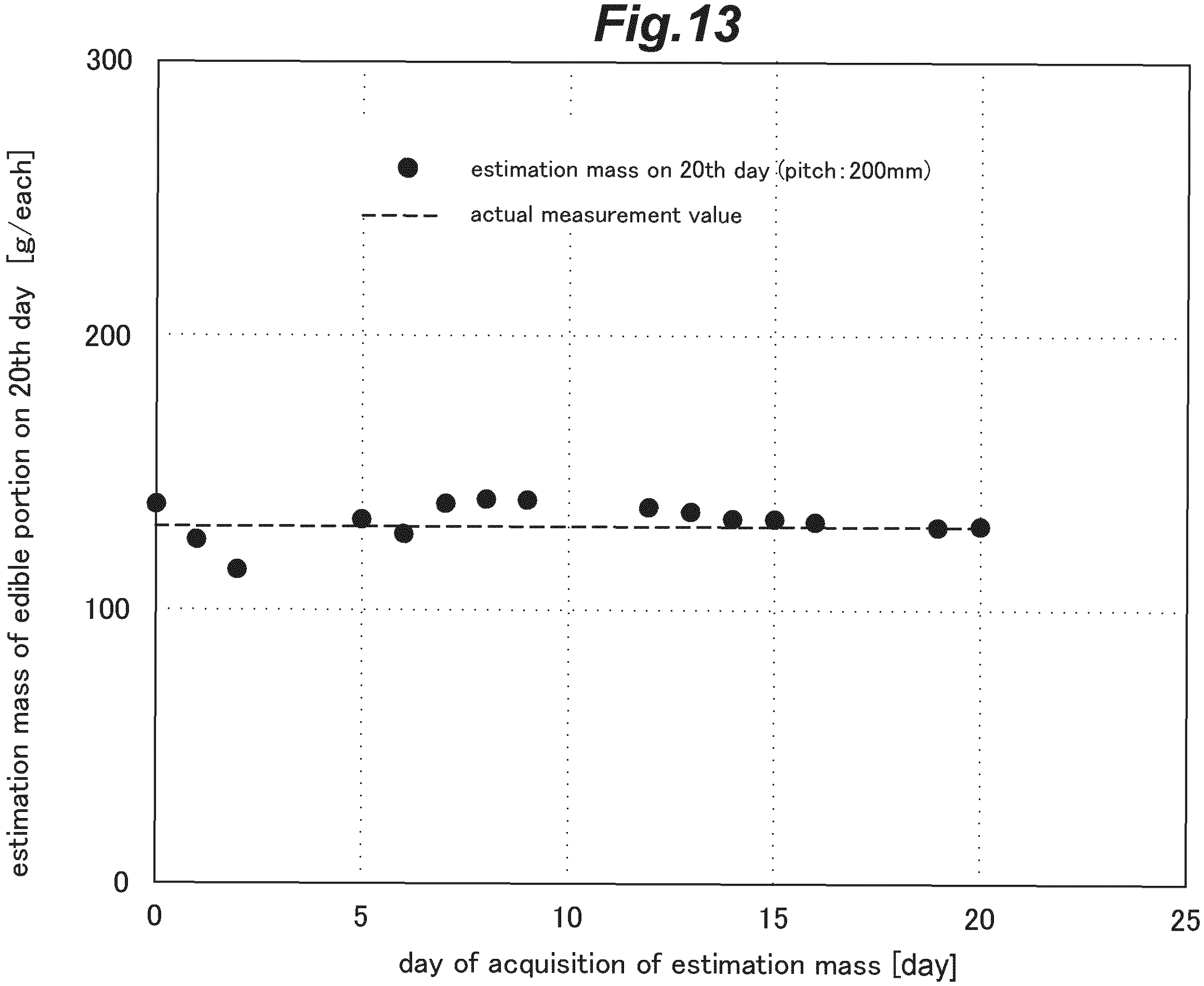
300
200
100
0
estimation mass of edible portion on 20th day [g/each]
estimation mass on 20th day (pitch: 200mm)
actual measurement value
0
5
10
15
20
25
day of acquisition of estimation mass [day]

*Fig.14*

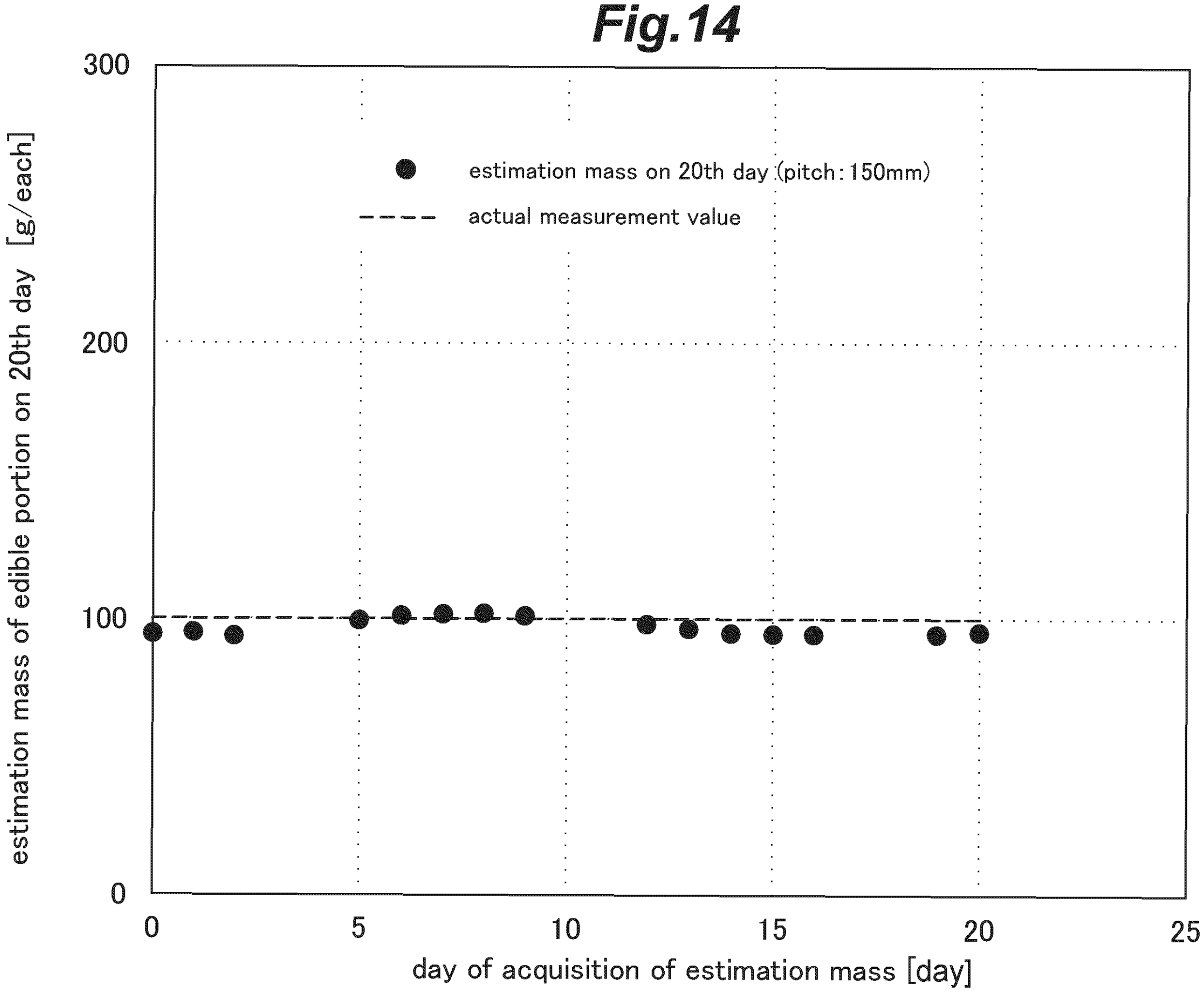
300
200
100
0
estimation mass of edible portion on 20th day [g/each]
0
5
10
15
20
25
day of acquisition of estimation mass [day]
estimation mass on 20th day (pitch: 150mm)
actual measurement value

**INTERNATIONAL SEARCH REPORT**

International application No. **PCT/JP2023/008600**

**A. CLASSIFICATION OF SUBJECT MATTER**

***A01G 7/00***(2006.01)i
FI: A01G7/00 603; A01G7/00 601A

According to International Patent Classification (IPC) or to both national classification and IPC

**B. FIELDS SEARCHED**

Minimum documentation searched (classification system followed by classification symbols)

A01G7/00,A01G31/00,G01N21/27,G06Q50/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2015/093054 A1 (CHIYODA CORPORATION) 25 June 2015 (2015-06-25) entire text, all drawings | 1-8 |
| A | JP 2019-103452 A (CHIYODA CORPORATION) 27 June 2019 (2019-06-27) entire text, all drawings | 1-8 |
| A | JP 2002-168771 A (EBARA CORP) 14 June 2002 (2002-06-14) entire text, all drawings | 1-8 |
| A | CN 107423530 A (UNIV. SHENYANG AGRICULTURAL) 01 December 2017 (2017-12-01) entire text, all drawings | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/008600**

| Patent document cited in search report | Publication date (day/month/year) | Patent family member(s) | Publication date (day/month/year) |
|---|---|---|---|
| WO 2015/093054 A1 | 25 June 2015 | (Family: none) | |
| JP 2019-103452 A | 27 June 2019 | WO 2019/117008 A1 | |
| JP 2002-168771 A | 14 June 2002 | (Family: none) | |
| CN 107423530 A | 01 December 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008076346 A
- JP 2015223101 A